# EUROPÄISCHE PATENTANMELDUNG

(11) **EP 0 626 213 A2**
(43) Veröffentlichungstag der Anmeldung: **30.11.1994**
(21) Anmeldenummer: 94107435.3
(22) Anmeldetag: 13.05.1994
(51) Int. Cl.: B07C 5/34, B07C 5/36

(54) **Verfahren und Vorrichtung zum Sortieren von Abfallgemischen**

(30) Priorität: 17.05.1993 DE 4316422
(71) Anmelder: BFI ENTSORGUNGSTECHNOLOGIE GmbH, D-40883 Ratingen (DE); RWE Entsorgung Aktiengesellschaft, D-45141 Essen (DE)
(72) Erfinder: Wintrich, Franz, Dipl.-Ing., D-45309 Essen (DE); Kaiser, Dieter, Dipl.-Ing., D-44357 Dortmund (DE)

(57) **Zusammenfassung**

Die vorliegende Erfindung betrifft ein Verfahren zum Sortieren von Abfallgemischen, wobei charakteristische Merkmale von Abfallobjekten durch Bestrahlung derselben mit elektromagnetischen und/oder akustischen Wellen erfaßt werden, die Abfallobjekte durch eine Verarbeitung der vom Abfallobjekt ankommenden Wellen durch elektronische Signalverarbeitung identifiziert werden und über die elektronische Signalverarbeitung Signale an eine Abtrennvorrichtung geleitet werden, die das identifizierte Abfallobjekt aus dem Abfallgemisch abtrennt, wobei das Abfallgemisch in Gebinden und/oder lose auf eine Transportstraße aufgegeben wird, Abfallgemische enthaltende Gebinde geöffnet werden, daß eine Grobfraktion identifiziert und abgetrennt wird und von dem verbleibenden Abfallgemisch mindestens eine weitere Fraktion abgetrennt wird, deren Bestandteile identifiziert und sortiert werden.

## Beschreibung

Die vorliegende Erfindung betrifft ein Verfahren zum Sortieren von Abfallgemischen, wobei charakteristische Merkmale von Abfallobjekten durch Bestrahlung derselben mit elektromagnetischen und/oder akustischen Wellen erfaßt werden, die Abfallobjekte durch eine Verarbeitung der vom Abfallobjekt ankommenden Wellen durch elektronische Signalverarbeitung identifiziert werden und über die elektronische Signalverarbeitung Signale an eine Abtrennvorrichtung geleitet werden, die das identifizierte Abfallobjekt aus dem Abfallgemisch abtrennt, wobei das Abfallgemisch in Gebinden und/oder lose auf eine Transportstraße aufgegeben wird, Abfallgemische enthaltende Gebinde geöffnet werden, daß eine Grobfraktion identifiziert und abgetrennt wird und von dem verbleibenden Abfallgemisch mindestens eine weitere Fraktion abgetrennt wird, deren Bestandteile identifiziert und sortiert werden.

Die vorliegende Erfindung betrifft ferner eine Vorrichtung zur Durchführung des Verfahrens.

Eine Rückgewinnung wiederverwertbarer Materialien aus Abfällen ist für Industrie, Gewerbe, Handel und Haushaltungen von großer Bedeutung. Durch das Duale System z. B. werden vorwiegend Verpackungsmaterialien und -erzeugnisse haushaltsnah gesammelt, wobei eine möglichst weitgehende Wiederverwertung der Materialien und Erzeugnisse angestrebt wird. Hierbei steht eine stoffliche Verwertung im Vordergrund, die eine weitgehend sortenreine Sortierung der Materialien und Erzeugnisse bedingt.

Zur haushaltsnahen Sammlung von derartigen Materialien und Erzeugnissen werden bei einem Bringsystem für mehrere Haushalte z. B. in Wohngebietnähe größere Wertstofftonnen aufgestellt, in die der jeweilige Verbraucher seine entsprechenden Abfälle werfen kann, während bei einem für einzelne Haushalte geeigneten Holsystem die sogenannte "Gelbe Tonne" oder auch ein "Gelber Sack" zur Sammlung vorgesehen ist. Im Unterschied zur regelmäßigen Entleerung der "Gelben Tonne" oder der "Wertstofftonne" wird der "Gelbe Sack" komplett mit Inhalt zur Verwertung abgeholt.

Bei derartigen Sammlungen fällt ein Gemisch von Gegenständen aus Kunststoffen und anderen Materialien an wie Folien, Bechern, Flaschen und Schaumstoffen aus Kunststoff, Kartonverpackungen aus Verbundstoffen für flüssige Nahrungsmittel und Metallverpackungsmaterialien beispielsweise aus Weißblech und Aluminium. Die einzelnen Gegenstände weisen zum Teil eine stark unterschiedliche Formgebung und Größe auf, sind teilweise deformiert oder sogar beschädigt. So enthält ein Abfallgemisch u. a. weitgehend flächige Materialien wie Folien, Papier, sogar Textilien mit zum Teil relativ großen Ausdehnungen und ggf. auch einzelne Teile von stark beschädigten Verpackungen. Obgleich Sortierverfahren in vielen anderen Bereichen intensiv weiterentwickelt worden sind, werden derartige Abfallgemische heute noch teilweise von Hand sortiert, wodurch die Wirtschaftlichkeit der Abfallsortierung stark beeinträchtigt wird.

Aus der DE-OS 4125045 ist ein Verfahren zum Sortieren von Abfallgemischen bekannt, wobei charakteristische Merkmale der Abfallobjekte durch Bestrahlung derselben mit elektromagnetischen und/oder akustischen Wellen erfaßt werden, die Abfallobjekte mittels einer Verarbeitung der vom Abfallobjekt ankommenden Wellen durch eine elektronische Signalverarbeitung identifiziert werden und über die elektronische Signalverarbeitung Signale an eine Abtrennvorrichtung geleitet werden, die das identifizierte Abfallobjekt aus dem Abfallgemisch aussortiert. Hierbei ist ggf. auch eine Verteilung des Abfallgemisches, z. B. auf einem Transportband, derart vorgesehen, daß die Abfallobjekte durch die angewendeten Wellen möglichst vollständig erfaßbar sind. Mit diesem bekannten Verfahren ist eine zufriedenstellende Sortierung von Abfällen nur möglich, wenn die Abfallobjekte eine im wesentlichen vergleichbare Größe aufweisen, da größere Abfallobjekte kleinere überdecken können, die dann einer Erfassung nicht mehr zugänglich sind. Obgleich eine weitgehende Vereinzelung der Abfallobjekte auf einem Transportband zwar die Erfassung derselben verbessert, vermindert diese jedoch die Kapazität des Transportbandes, da die Abfallobjekte zunächst einen weitgehend freien Raum auf dem Transportband einnehmen müssen, so daß der Durchsatz des Verfahrens vermindert wird.

In der DE-OS 3520486 ist ein Verfahren und eine Vorrichtung zur Trennung von Kunststoffabfällen aus Müll, insbesondere Hausmüll, beschrieben. Hierbei wird unsortierter Kunststoffmüll auf einer Transportstraße an einem optischen Erfassungsgerät, wie z. B. einer Videokamera, vorbeigeführt, das mit einem Speicher zur Identifizierung der einzelnen Kunststoffteile verbunden ist. Stromabwärts sind an der Transportstraße Abzweigungen, Weichen oder dergleichen angeordnet, die gesteuert in Abhängigkeit von den identifizierten Kunststoffteilen Zuführungen zu einzelnen Zwischensammelbehältern zum Sammeln von Kunststoffteilen gleicher Art freigeben. Hierbei kann auch vorgesehen sein, daß vor dem optischen Erfassungsgerät die ankommenden Kunststoffteile auf einer Größensortiereinrichtung z. B. einem Lochsieb in zwei oder mehrere Größen aufgeteilt und getrennt mehreren Transportstraßen zugeführt werden. Dieses Verfahren erlaubt keine Sortierung von heterogen zusammengesetzten Abfallgemischen. So können ein oder mehrere beispielsweise durch eine größere Folie verdeckte Kunststoffteile nicht mehr identifiziert werden, so daß die Abzweigungen, Weichen oder dergleichen nicht angesteuert werden und keine Sortierung erfolgt. Mit einer vorgeschlagenen Vereinzelung vor dem Erfassungsgerät könnten zwar einzelne Kunststoffteile und flächige Abfallobjekte identifiziert werden, jedoch besteht dabei die Gefahr, daß die flächigen Abfallobjekte sich in den Abzweigungen verfangen, die Zuführungen zusetzen und einen Weitertransport anderer Kunststoffteile verhindern. Die dem Erfassungsgerät vorschaltbare Größensortiereinrichtung, z. B. ein Lochsieb, hat ferner den Nachteil, das sie sich leicht zusetzen kann. Aber auch eine Sortierung von weitgehend Kunststoffhohlkörper umfassenden Abfallgemischen mit diesen Verfahren und dieser Vorrichtung ist in ihrer Leistungsfähigkeit beschränkt, da die Kunststoffhohlkörper nach Verstellen von Abzweigungen, Weichen oder dergleichen nur aufgrund ihrer Gewichtskraft in freigegebene Zuführungen von Zwischensammelbehältern von der Transportstraße fallen können. Ein Abtrennen der Kunststoffhohlkörper durch einen freien Fall derselben liefert jedoch eine zu geringe Abtrenngeschwindigkeit, die noch geringer wird, wenn die Zuführungen als Rutschen ausgebildet sind.

Aufgabe der vorliegenden Erfindung ist es, ein Verfahren zum Sortieren von Abfallgemischen bereitzustellen, das eine weitgehend automatisierte Sortierung von heterogen zusammengesetzten, in Gebinden und/oder lose anfallenden Abfallgemischen weitgehend unabhängig von der flächenmäßigen oder räumlichen Ausdehnung der Abfallobjekte erlaubt und eine hohe Sortierleistung aufweist.

Diese Aufgabe wird dadurch gelöst, daß bei dem erfindungsgemäßen Verfahren zum Sortieren von Abfallgemischen charakteristische Merkmale von Abfallobjekten durch Bestrahlung derselben mit elektromagnetischen und/oder akustischen Wellen erfaßt werden, die Abfallobjekte durch eine Verarbeitung der vom Abfallobjekt ankommenden Wellen durch elektronische Signalverarbeitung identifiziert werden und über die elektronische Signalverarbeitung Signale an eine Abtrennvorrichtung geleitet werden, die das identifizierte Abfallobjekt aus dem Abfallgemisch abtrennt, wobei das Abfallgemisch in Gebinden und/oder lose auf eine Transportstraße aufgegeben wird, Abfallgemische enthaltende Gebinde geöffnet werden, eine Grobfraktion identifiziert und abgetrennt wird und von dem verbleibenden Abfallgemisch mindestens eine weitere Fraktion abgetrennt wird, deren Bestandteile identifiziert und sortiert werden und daß bei der erfindungsgemäßen Vorrichtung eine das Abfallgemisch in Gebinden und/oder lose aufnehmende Transportstraße vorgesehen ist, die eine Vorrichtung zum Öffnen der Gebinde aufweist, letzterer mindestens eine eine Strahlenquelle und eine Signalverarbeitungsvorrichtung umfassende Identifizierungsvorrichtung und eine Abtrennvorrichtung für eine Grobfraktion nachgeordnet ist, der Abtrennvorrichtung nachgeordnet eine Fraktioniervorrichtung zur Abtrennung wenigstens einer weiteren Fraktion und eine eine Strahlenquelle und eine Signalverarbeitungsvorrichtung umfassende Identifizierungsvorrichtung mit einer nachgeschalteten Sortiervorrichtung für die weitere Fraktion vorgesehen sind.

Dadurch, daß bei dem erfindungsgemäßen Verfahren das Abfallgemisch in Gebinden und/oder lose auf eine Transportstraße aufgegeben wird, können sowohl durch das Bringsystem als auch durch das Holsystem gesammelte Abfallgemische ohne weiteres gleichzeitig als auch getrennt sortiert werden. Ein Öffnen von auf eine Transportstraße aufgegebenen Abfallgemische enthaltenden Gebinden ermöglicht einen kontinuierlichen Betrieb und vermeidet ein aufwendiges Öffnen per Hand. Eine Identifizierung und Abtrennung einer Grobfraktion gewährleistet eine Entfernung von Abfallobjekten aus dem Abfallgemisch, die sonst zu einer unvollständigen und fehlerhaften Sortierung führen würden. Eine Abtrennung mindestens einer weiteren Fraktion aus dem verbleibenden Abfallgemisch, deren Bestandteile identifiziert und sortiert werden, erlaubt eine der jeweiligen Fraktion angepaßte Sortierung und verringert den Sortieraufwand für das Abfallgemisch. Die Sortierleistung des Verfahrens ist durch ein weitgehendes Vermeiden von Erkennungsfehlern, ein automatisiertes Öffnen von Abfallgemische enthaltenden Gebinden, das Abtrennen bei der weiteren Verarbeitung störender großer Abfallobjekte und ein Identifizieren und Sortieren mindestens einer weiteren aus dem verbleibenden Abfallgemisch abgetrennten Fraktion wesentlich erhöht. Eine derartige Fraktion kann z. B. eine Gruppe von Abfallobjekten darstellen, die zwischen einem Unterkorn und einem Oberkorn eines Größenspektrums eines Abfallgemisches liegt und deren Sortierung in einzelne unterschiedliche Bestandteile besonders sinnvoll ist, während Unterkorn und/oder Oberkorn weitgehend gleiche Bestandteile aufweisen und ggf. keiner weiteren Sortierung bedürfen oder zum stofflichen Recyceln ungeeignet sind. Eine Identifizierung und Abtrennung der Grobfraktion ist besonders zweckmäßig, wenn diese im wesentlichen flächige Abfallobjekte wie Folien, Papier oder Textilien mit ggf. größeren Ausdehnungen umfaßt. Hierbei können aber auch räumliche Abfallobjekte größerer Ausdehnungen, die eine Identifizierung anderer Abfallobjekte behindern, abgetrennt werden. Bevorzugt weist die weitere abgetrennte Fraktion räumliche Abfallobjekte auf, die relativ einfach vereinzelbar sind und mit hoher Sortiergeschwindigkeit aussortiert werden können.

Die Bestrahlung der Abfallobjekte erfolgt bevorzugt mit Wellen aus dem Wellenlängenbereich von sichtbarem Licht und/oder UV und/oder IR, aber auch akkustische Wellen können erfindungsgemäß eingesetzt werden.

Für ein weitgehend kontinuierlich betriebenes Verfahren kann auch vorgesehen sein, daß das Abfallgemisch auf der Transportstraße durch eine Verteilvorrichtung verteilt und/oder aufgelockert wird. Zum Öffnen von Gebinden werden diese bevorzugt an einer Aufschneide- oder Aufreißvorrichtung vorbeigeführt, welche die Gebinde öffnet bzw. aufschneidet oder aufreißt.

Zur Identifizierung der Abfallobjekte der Grobfraktion bieten sich Textur, Farb- und/oder Struktur- und/oder Faltengebung der Abfallobjekte an. Für ein Abtrennen der Grobfraktion, die u. a. sackartige Behältnisse, z. B. aufgeschnittene Gebindehüllen, umfassen kann, ist ein Abziehen der identifizierten Abfallobjekte, beispielsweise durch einen Greifer oder einen Sauger, zweckmäßig. Die weitere Fraktion kann von dem verbleibenden Abfallgemisch durch eine sonstige Fraktionierung abgetrennt werden, wobei bevorzugt gewünschte Trennschnitte einstellbar sind. Zur Identifizierung und Sortierung dieser Fraktion können deren Bestandteile auf einer Vereinzelungsvorrichtung vereinzelt werden. Durch mehrspuriges Transportieren und Ausrichten dieser Bestandteile auf einer Transportstraße in Förderrichtung kann die Sortierleistung gesteigert werden. Eine besonders hohe Sortiergeschwindigkeit beim Aussortieren der Bestandteile der weiteren Fraktion ist mit einer pneumatischen Aussortierung erreichbar.

Aus der weiteren abgetrennten Fraktion können metallhaltige Abfallobjekte durch geeignete Abscheidevorrichtungen wie z. B. einen Magnetabscheider abgetrennt werden.

Anstelle einer der Abscheidung der Grobfraktion nachgeschalteten Abtrennung einer weiteren Fraktion können auch mehrere weitere Fraktionen abgetrennt werden.

Zur Durchführung des erfindungsgemäßen Verfahrens dient bevorzugt die erfindungsgemäße Vorrichtung. Dadurch, daß das Abfallgemisch in Gebinden und/oder lose aufnehmende Transportstraße vorgesehen ist, können mit dieser Vorrichtung sowohl im Bringsystem als auch im Holsystem gesammelte Abfallgemische sortiert werden. Eine Vorrichtung zum Öffnen der Gebinde gewährleistet einen weitgehend automatisierten Betrieb. Eine der Identifizierungsvorrichtung nachgeordnete Abtrennvorrichtung für eine Grobfraktion ermöglicht eine weitgehende Beseitigung von Störquellen bei weiteren Sortierschritten. Eine der Abtrennvorrichtung nachgeordnete Fraktioniervorrichtung zur Abtrennung wenigstens einer weiteren Fraktion erlaubt eine Aufspaltung des verbleibenden Abfallgemisches in Fraktionen, an die ggf. verschiedene Sortieranforderungen gestellt werden. Dadurch, daß eine eine Strahlenquelle und eine Signalverarbeitungsvorrichtung umfassende Identifizierungsvorrichtung mit einer nachgeschalteten Sortiervorrichtung für eine weitere Fraktion vorgesehen sind, ist der Sortieraufwand den Bestandteilen dieser Fraktion anpaßbar, so daß eine herstellerspezifische Sortierung als auch eine sortenreine Sortierung ermöglicht ist.

Weitere Ausgestaltungen der Erfindung sind der nachfolgenden Beschreibung und den Unteransprüchen zu entnehmen.

Die Erfindung wird anhand eines in den beigefügten Abbildungen dargestellten Ausführungsbeispiels näher erläutert.

Figur 1 zeigt eine Aufsicht auf eine Vorrichtung zum Sortieren von Abfallgemischen.

Figur 2 zeigt eine Ansicht der Figur 1 entlang der Linie A-A.

Figur 3 zeigt eine Ansicht der Figur 1 entlang der Linie B-B.

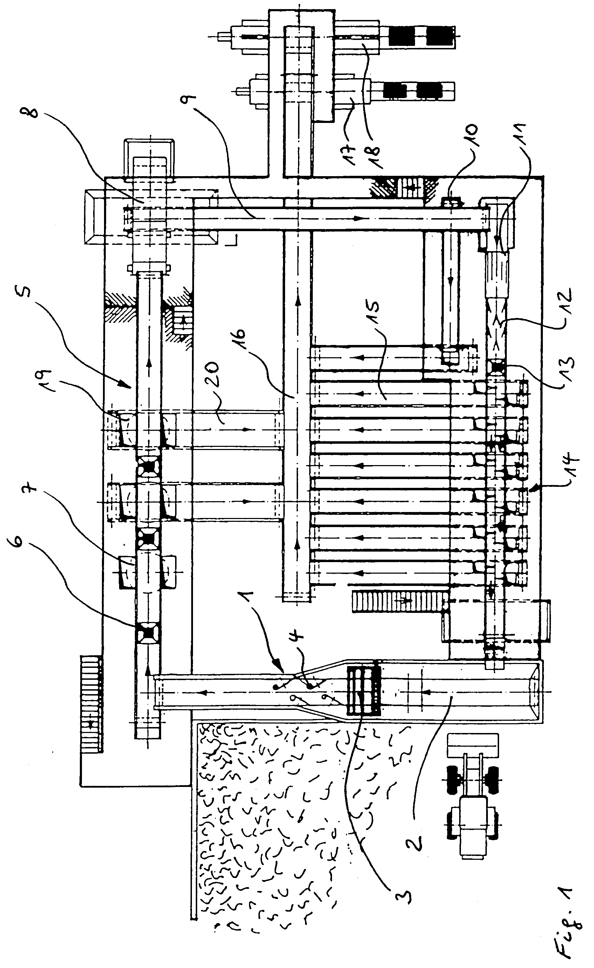

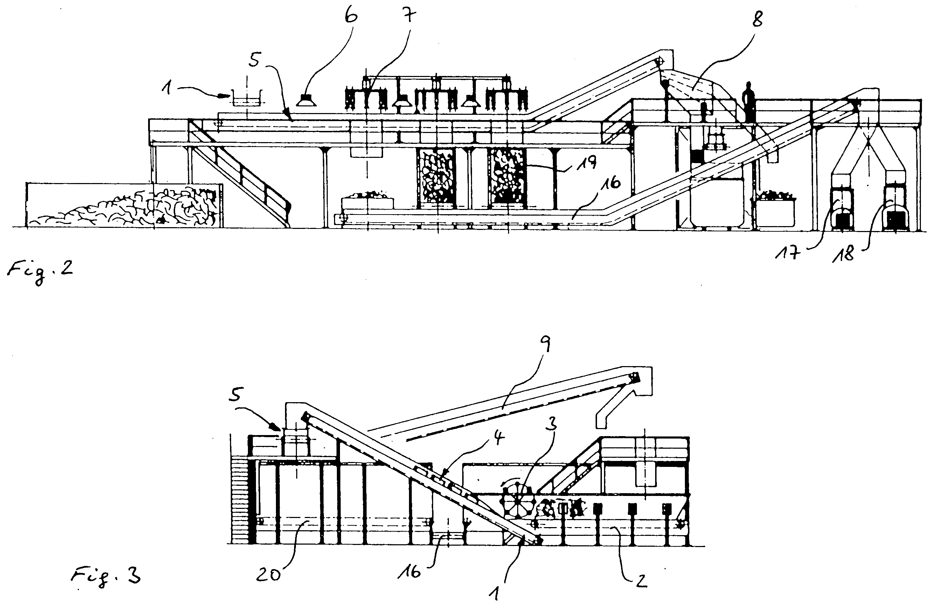

Die in Figur 1 beispielhaft schematisch dargestellte Vorrichtung zum Sortieren von Abfallgemischen umfaßt eine aus zwei Förderbändern gebildete Transportstraße 1 mit einem Aufgabeabschnitt 2, dem eine walzenartige Verteilvorrichtung 3 mit einer daran anschließenden Aufschneidevorrichtung 4 nachgeordnet ist. Quer zu der Transportstraße 1 ist eine Transportstraße 5 angeordnet, der Identifizierungsvorrichtungen 6 und greiferartige Abtrennvorrichtungen 7 zugeordnet sind. Am Ende der Transportstraße 5 ist eine Fraktioniereinrichtung 8 vorgesehen. An die Fraktioniervorrichtung 8 schließt sich ein Transportband 9 mit einer zugeordneten Magnetabscheidevorrichtung 10 an. Am Ende des Transportbandes 9 ist eine Vereinzelungsvorrichtung 11 angeordnet, der sich eine Ausrichtvorrichtung 12 anschließt. Der Ausrichtvorrichtung 12 ist eine Erkennungsvorrichtung 13 und eine sechsstufige Sortiervorrichtung 14 nachgeordnet. Die Sortiervorrichtung 14 weist 6 Bunker (nicht dargestellt) mit 6 Sammelbändern 15 auf, die zu einem Sammelband 16 führen. Am Ende des Sammelbandes 16 sind zwei Ballenpressen 17, 18 angeordnet. Wie in Figur 2 verdeutlicht, ist zwei Abtrennvorrichtungen 7 jeweils ein Bunker 19 und ein Sammelband 20 zugeordnet. Die Sammelbänder 20 führen auf das Sammelband 16.

Zur Sortierung von Abfallgemischen werden Gebinde von Abfallgemischen und/oder loses Abfallgemisch auf den Aufgabeabschnitt 2 der Transportstraße 1 aufgegeben, vgl. Figur 3. Das Abfallgemisch wird von der Verteilvorrichtung 3 auf der Transportstraße 1 verteilt und aufgelockert. Hierbei wird auf der Transportstraße 1 befindliches Material in offenen Segmente der walzenartig ausgebildeten Verteilvorrichtung 3 aufgenommen, kann sich durch die sich drehende Verteilvorrichtung hindurch bewegen und fällt anschließend wieder auf die Transportstraße 1. Die Transportstraße 1 kann in dem Aufgabeabschnitt 2 auch als Speicherband, z. B. als Bunkerband dienen, wenn z. B. die Drehrichtung und/oder -geschwindigkeit der Verteilvorrichtung 3 entsprechend gewählt ist. Eine derartige Verteilvorrichtung ist beispielsweise walzenartig und drehbar oder auch spiralförmig ausgebildet, wobei die Walze mittels eines Antriebs mit unterschiedlich einstellbarer Umdrehungsgeschwindigkeit rotierbar ist, aus nach außen offenen Segmenten besteht und mittels stabartiger über die Walzenbreite verlaufender Bauteile in Segmente unterteilt ist. Auf den stabartigen Bauteilen können sich den Verteilungsvorgang unterstützende Anordnungen befinden. Die stabartigen Bauteile sind bevorzugt rund ausgebildet. Sie können jedoch auch beliebige andere Querschnitte wie z. B. viereckige, rechteckige, ovale oder trapezartige, gerillte und anders geformte Querschnitte besitzen. Bevorzugt sind die Bauteile selbst drehbar, demgemäß sind drehbare Rollen bevorzugt, die Rollen können jedoch auch starr oder spiralförmig angeordnet sein. Die Walze wird mit einem Antrieb in Drehbewegung versetzt. Auch die Rollen können eigene Antriebe besitzen, sie können jedoch auch über Riemen durch den zentralen Walzenantrieb drehbar sein. Eine Einstellung der Drehgeschwindigkeit erfolgt in Abhängigkeit von der Belastung der Walze, der Größe und Art des zu verteilenden und aufzulockernden Gutes, der Anzahl der Segmente und der Transportgeschwindigkeit von zuführendem und wegführendem Band. Wesentlich für eine derartige Verteilvorrichtung ist, daß die Segmente sowie die Drehbewegungen dem zu verteilenden Gut angepaßt sind, da das Gut durch die Segmente hindurchtreten muß. Teilweise kann es jedoch auch über die Walze hinweg oder unter dieser hindurch befördert werde. Hierzu ist die Walze in der Höhe einstellbar und nimmt hierdurch veränderbare Positionen zu den Förderbändern ein.

Nach dem Durchlaufen der Verteilvorrichtung 3 gelangt das Abfallgemisch an die Aufschneidevorrichtung 4, wo ggf. Abfallobjekte enthaltende Gebinde aufgeschnitten werden.

Eine derartige Aufschneidevorrichtung ist mit Einbauten versehen, die zumindest teilweise Werkzeuge zum Öffnen einer Gebindehülle aufweisen, wobei die Gebinde beim Passieren der Einbauten geöffnet werden. Die Einbauten können beispielsweise leitblechartig zu beiden oder auch an einer Seite der Transportstraße angeordnet sein. Hierdurch ist eine Umlenkung der Gebinde auf dem Transportweg und damit eine vollständige Öffnung der Gebinde und eine Verteilung des Inhalts der Gebinde auf einem Band möglich. An den Einbauten sind beispielsweise Werkzeuge angeordnet, die beim Passieren des Gebindes dieses aufschlitzen. Da vorzugsweise wenigstens zwei solcher Einbauten vorgesehen sind, besonders bevorzugt drei bis sechs, müssen die Gebinde mehrere Einbauten passieren. Hierbei werden die Gebinde an mehreren und verschiedenen Stellen aufgeschlitzt. Das Aufschlitzen der Gebinde wird einmal dadurch begünstigt, daß sich die Gebinde in Längsrichtung zwischen den Einbauten bewegen, wobei letztere eine Umlenkung verursachen. Zusätzlich kann auch ein langsames Rotieren der Gebinde auftreten. Als Schneidwerkzeuge können grundsätzlich alle Geräte eingesetzt werden, die geeignet sind, die Gebindehülle aufzuschneiden oder aufzureißen oder in anderer Weise zu öffnen. Demgemäß kann es sich um Messer, Sägen, Schneidscheiben, zahnartige Reißwerkzeuge, rechenförmige Schneid- und Reißwerkzeuge und dergleichen handeln. Als besondere geeignet hat sich ein eine Kreisbahn bildender Faden erwiesen, wie er beispielsweise zum Schneiden von Rasenrändern eingesetzt wird. Ein derartig rotierender Faden hat sich als besonders gut geeignet erwiesen, da die Gebindehülle aufgeschnitten wird, jedoch das darin enthaltende Gut praktisch nicht bzw. nur sehr geringfügig beschädigt wird.

Das derartig verteilte und aufgelockerte Abfallgemisch gelangt von der Transportstraße 1 auf die Transportstraße 5 und wird an einer Identifizierungsvorrichtung 6 vorbeigeführt. Von der Identifizierungsvorrichtung 6 wird eine Grobfraktion identifiziert und aussortiert. Im Ausführungsbeispiel sind drei Identifizierungsvorrichtungen 6 dreistufig hintereinandergeschaltet, wobei in einer ersten Stufe Schaumstoff, Säcke oder ähnliches in einer zweiten Stufe Folien und in einer dritten Stufen Störstoffe wie z. B. Textilien identifiziert werden. Die der Anordnung der Identifizierungsvorrichtungen 6 entsprechend dreistufig vorgesehene Anordnung von Abtrennvorrichtungen 7 trennen die identifizierten Materialien jeweils in der entsprechenden Stufe aus dem Abfallgemisch ab. Hierbei können Greifer das entsprechende Abfallobjekt aus dem Abfallgemisch abziehen und in Bunker 19 abwerfen oder Walzenpaaren (nicht dargestellt) zum weiteren Abziehen zuführen. Nach dem Durchlaufen der Identifizierungsvorrichtungen 6 und der Abtrennvorrichtungen 7 weist das verbleibende Abfallgemisch nach Abtrennung der Grobfraktion nur noch weitgehend dreidimensionale Abfallobjekte und ggf. kleinere flächige Bestandteile, z. B. Papier und/oder Folienschnipsel, auf. Das derart vorsortierte Abfallgemisch wird von der Transportstraße 5 zu einer Fraktioniervorrichtung 8 befördert. In der Fraktioniervorrichtung 8 wird eine weitere Fraktion abgetrennt, die über ein Transportband 9 einer weitergehenden Sortierung zugeführt wird. In der Fraktioniervorrichtung 8 lassen sich mehrere Fraktionen abspalten, von denen einige nicht weiter sortiert werden müssen, da sie für ein stoffliches Recyceln ungeeignet sind oder ihre Bestandteile weitgehend gleiche Merkmale aufweisen. Aus der für eine weitergehende Sortierung bestimmten Fraktion werden zunächst durch eine dem Transportband 9 zugeordnete Magnetabscheidevorrichtung 10 Metall enthaltende Bestandteile aussortiert. Das derartig weitgehend von Metallbestandteilen befreite Abfallgemisch wird von dem Transportband 9 zu der Vereinzelungsvorrichtung 11 transportiert. Bei einer derartigen Vereinzelungsvorrichtung wird beispielsweise das Objektgemisch auf eine Rüttelvorrichtung aufgebracht, auf der das Objektgemisch unter gleichzeitiger Vereinzelung der Objekte in Richtung zu einer anschließenden Fördervorrichtung bewegt wird, welche die vereinzelten Abfallobjekte von einander getrennt aufnimmt, wobei zur getrennten Aufnahme auf eine Fördervorrichtung nicht ausreichende Vereinzelung auf der Rüttelvorrichtung die nicht ausreichend vereinzelten Abfallobjekte einer weiteren Fördervorrichtung zugeführt werden, die eine Rückführung der Objekte auf die Rüttelvorrichtung ermöglicht. Hierbei kann die Fläche der Rüttelvorrichtung rillenförmig ausgebildet sein, wobei die Rillen in Richtung der Förderrichtung verlaufen. Seitlich und/oder oberhalb der Rüttelvorrichtung und Fördervorrichtung und an sonstigen zur Steuerung vorgesehenen Punkten können Sensoren angebracht sein, welche auf der Rüttelvorrichtung ausreichend vereinzelte Objekte der hierfür vorgesehenen Fördervorrichtung zuleiten und die Aufgabe der Objekte auf diese Fördervorrichtung in der Weise steuern, daß eine getrennt Aufnahme auf derselben in hierfür vorgesehenen Wannen, Behältern, Vertiefungen oder dergleichen erfolgt. Für eine Vereinzelung ist von Bedeutung, daß Rüttelbewegungen, Fördergeschwindigkeit auf der Rüttelvorrichtung und Fördergeschwindigkeit auf der anschließenden Fördervorrichtung so aufeinander abgestimmt sind, daß eine maximale Anzahl an vereinzelten Objekten abgetrennt bzw. aussortiert werden kann. Über die Ausrichtvorrichtung 12 werden die von der Vereinzelungsvorrichtung 11 vereinzelt ankommenden Abfallobjekte mehrspurig in Transportrichtung ausgerichtet. Die mehrspurig ausgerichteten Abfallojekte werden an der Erkennungsvorrichtung 13 vorbeigeführt. Die Erkennungsvorrichtung 13 ist mit der Sortiervorrichtung 14 verbunden, die die identifizierten Abfallobjekte pneumatisch aussortiert. Durch ein Anblasen mit einem ansteuerbaren Luftstrahl werden hierbei die Abfallobjekte aus dem Gemisch in die entsprechenden Bunker ausgetragen.

In Abhängigkeit von dem Füllstand der jeweiligen Bunker können die Sammelbänder 20, 15 zyklisch in Gang gesetzt werden und sortenrein bzw. herstellerspezifisch sortierte Abfallobjektgruppen auf das Sammelband 16 transportiert werden. Über das Sammelband 16 gelangen die Abfallobjektgruppen zu den wahlweise betätigbaren Ballenpressen 17, 18 und werden zu Transportballen gepreßt.

Mit dem erfindungsgemäßen Verfahren und der bevorzugt zu dessen Durchführung dienenden Vorrichtungen kann die Sortierquote oder Sortierfeinheit von Gemischen unterschiedlicher Körper beliebig gesteigert werden. Z. B. können in der Fraktioniervorrichtung 8 abgetrennte Fraktionen jeweils einer weitergehenden Sortierung zugeführt werden, wenn diese Fraktionen kein ausreichend übereinstimmendes Merkmalsspektrum der Bestandteile aufweisen.

Durch eine hohe Anzahl von Stufen in der Sortiervorrichtung 14 können weitgehend identische Abfallobjekte jeweils zu einer Gruppe zusammengestellt werden. Eine derartige Sortierung kann soweit erfolgen, daß die aussortierten Gruppen eine Produktionsabfällen entsprechende Qualität, d. h. eine weitgehende Merkmalsübereinstimmung der einzelnen Bestandteile, aufweisen. Es können z. B. Getränkeverpackungen aus Verbundmaterialien getrennt nach Aluminiumgehalt sortiert werden. Eine Sortierung von Kunststoffgegenständen ist je nach Anforderungen eines Verwerters bis hin zum einzelnen Produkt möglich, d. h. es können Kunststofffraktionen mit definierten Eigenschaften wie Material, gleiche Farbe, gleiche Additivierung, anhand von Herstellerspezifikationen einer Verwertung zugeführt werden, die vergleichbar mit einer Verwertung von Kunststoffabfällen aus Produktionsprozessen ist.

## Patentansprüche

1. Verfahren zum Sortieren von Abfallgemischen, wobei charakteristische Merkmale von Abfallobjekten durch Bestrahlung derselben mit elektromagnetischen und/oder akustischen Wellen erfaßt werden, die Abfallobjekte durch eine Verarbeitung der vom Abfallobjekt ankommenden Wellen durch elektronische Signalverarbeitung identifiziert werden und über die elektronische Signalverarbeitung Signale an eine Abtrennvorrichtung geleitet werden, die das identifizierte Abfallobjekt aus dem Abfallgemisch abtrennt, dadurch gekennzeichnet, daß das Abfallgemisch in Gebinden und/oder lose auf eine Transportstraße aufgegeben wird, Abfallgemische enthaltende Gebinde geöffnet werden, daß eine Grobfraktion identifiziert und abgetrennt wird und von dem verbleibenden Abfallgemisch mindestens eine weitere Fraktion abgetrennt wird, deren Bestandteile identifiziert und sortiert werden.

2. Verfahren nach Anspruch 1, dadurch gekennzeichnet, daß die Grobfraktion im wesentlichen flächige Abfallobjekte umfaßt.

3. Verfahren nach Anspruch 1 oder 2, dadurch gekennzeichnet, daß mindestens eine weitere Fraktion im wesentlichen räumliche Abfallobjekte umfaßt.

4. Verfahren nach einem der Ansprüche 1 bis 3, dadurch gekennzeichnet, daß die Abfallobjekte mit Wellen aus dem Wellenlängenbereich von sichtbarem Licht und/oder UV und/oder IR bestrahlt werden.

5. Verfahren nach einem der Ansprüche 1 bis 4, dadurch gekennzeichnet, daß das Abfallgemisch auf der Transportstraße durch eine Verteilvorrichtung verteilt und/oder aufgelockert wird.

6. Verfahren nach einem der Ansprüche 1 bis 5, dadurch gekennzeichnet, daß die Gebinde an einer Aufschneide- oder Aufreißvorrichtung vorbeigeführt und geöffnet werden.

7. Verfahren nach einem der Ansprüche 1 bis 6, dadurch gekennzeichnet, daß zur Identifizierung der Abfallobjekte der Grobfraktion Textur und/oder Farb- und/oder Strukturgebung und/oder Faltenbildung der Abfallobjekte erfaßt werden.

8. Verfahren nach einem der Ansprüche 1 bis 7, dadurch gekennzeichnet, daß die Grobfraktion sackartige Behältnisse und/oder Folien und/oder Textilien umfaßt.

9. Verfahren nach einem der Ansprüche 1 bis 8, dadurch gekennzeichnet, daß die identifizierten Abfallobjekte der Grobfraktion aus dem Abfallgemisch abgezogen werden.

10. Verfahren nach einem der Ansprüche 1 bis 9, dadurch gekennzeichnet, daß die weitere(n) Fraktion(en) durch eine Fraktionierung des verbleibenden Abfallgemisches abgetrennt wird (werden).

11. Verfahren nach einem der Ansprüche 1 bis 10, dadurch gekennzeichnet, daß von mindestens einer weiteren Fraktion metallische Bestandteile enthaltende Abfallobjekte durch eine Magnetabscheidevorrichtung abgetrennt werden.

12. Verfahren nach einem der Ansprüche 1 bis 11, dadurch gekennzeichnet, daß die Abfallobjekte einer weiteren Fraktion auf einer Vereinzelungsvorrichtung vereinzelt werden.

13. Verfahren nach einem der Ansprüche 1 bis 12, dadurch gekennzeichnet, daß die Abfallobjekte einer weiteren Fraktion auf einer Transportstraße in Förderrichtung mehrspurig transportiert und ausgerichtet werden.

14. Verfahren nach einem der Ansprüche 1 bis 13, dadurch gekennzeichnet, daß zur Identifizierung der Abfallobjekte einer weiteren Fraktion Farb- und/oder Formgebung und/oder Textur und/oder Oberflächenstruktur derselben oder von weitgehend zerstörungsfreien Körperteilen derselben erfaßt werden.

15. Verfahren nach einem der Ansprüche 1 bis 14, dadurch gekennzeichnet, daß die identifizierten Abfallobjekte einer weiteren Fraktion pneumatisch aussortiert werden.

16. Vorrichtung zum Sortieren von Abfallgemischen, die eine oder mehrere Strahlenquellen für elektromagnetische und/oder akustische Wellen, Vorrichtungen zur Aufnahme der vom Abfallobjekt ankommenden Wellen, Signalverarbeitungsvorrichtungen zur Identifizierung der Abfallobjekte und durch von den Signalverarbeitungsvorrichtungen ausgehende Signale gesteuerte Abtrennvorrichtungen zum Abtrennen der identifizierten Abfallobjekte aufweist, dadurch gekennzeichnet, daß eine das Abfallgemisch in Gebinden und/oder lose aufnehmende Transportstraße vorgesehen ist, die eine Vorrichtung zum Öffnen der Gebinde aufweist, letzterer mindestens eine eine Strahlenquelle und eine Signalverarbeitungsvorrichtung umfassende Identifizierungsvorrichtung und eine Abtrennvorrichtung für eine Grobfraktion nachgeordnet ist, der Abtrennvorrichtung nachgeordnet eine Fraktioniervorrichtung zur Abtrennung wenigstens einer weiteren Fraktion und eine eine Strahlenquelle und eine Signalverarbeitungsvorrichtung umfassende Identifizierungsvorrichtung mit einer nachgeschalteten Sortiervorrichtung für eine weitere Fraktion vorgesehen sind.

17. Vorrichtung nach Anspruch 16, dadurch gekennzeichnet, daß Wellen aus dem Wellenlängenbereich von sichtbarem Licht und/oder UV und/oder IR abstrahlende Strahlungsquellen vorgesehen sind.

18. Vorrichtung nach Anspruch 16 oder 17, dadurch gekennzeichnet, daß eine das Abfallgemisch auf der Transportstraße verteilende und/oder auflockernde Verteilvorrichtung vorgesehen ist.

19. Vorrichtung nach einem der Ansprüche 16 bis 18, dadurch gekennzeichnet, daß die Vorrichtung zum Öffnen der Gebinde Werkzeuge zum Aufschneiden und/oder Aufreißen aufweist.

20. Vorrichtung nach einem der Ansprüche 16 bis 19, dadurch gekennzeichnet, daß die Abtrennvorrichtung für die Grobfraktion Greif- und/oder Abzugselemente zur Abtrennung von identifizierten Abfallobjekten aufweist.

21. Vorrichtung nach einem der Ansprüche 16 bis 20, dadurch gekennzeichnet, daß eine Magnetabscheidevorrichtung zur Abtrennung von metallische Bestandteile enthaltenden Abfallobjekten aus einer weiteren Fraktion vorgesehen ist.

22. Vorrichtung nach einem der Ansprüche 16 bis 21, dadurch gekennzeichnet, daß eine Abfallobjekte einer weiteren Fraktion vereinzelnde Vereinzelungsvorrichtung vorgesehen ist.

23. Vorrichtung nach einem der Ansprüche 16 bis 22, dadurch gekennzeichnet, daß eine die Abfallobjekte einer weiteren Fraktion mehrspurig ausrichtende und transportierende Transportstraße der Fraktioniervorrichtung nachgeordnet ist.

24. Vorrichtung nach einem der Ansprüche 16 bis 23, dadurch gekennzeichnet, daß die Sortiervorrichtung einen pneumatischen Austragmechanismus aufweist.
